# EUROPEAN PATENT SPECIFICATION

(11) **EP 2 268 487 B1**
(45) Date of publication and mention of the grant of the patent: **26.10.2016**
(21) Application number: 09755324.2
(22) Date of filing: 10.03.2009
(51) Int. Cl.: B32B 27/14, B44C 3/02, B44C 5/04, B32B 27/08, B32B 7/12

(54) **DECORATIVE SHEET**
DEKORFOLIE
FEUILLE DÉCORATIVE

(30) Priority: 31.03.2008 US 59048
(43) Date of publication of application: 05.01.2011
(73) Proprietor: 3M Innovative Properties Company, St. Paul, MN 55133-3427 (US)
(72) Inventor: KANNO, Mamoru, Tokyo 158-8583 (JP)
(74) Representative: Vossius & Partner Patentanwälte Rechtsanwälte mbB
(86) International application number: PCT/US2009/036618
(87) International publication number: WO 2009/145961

(56) References cited:
- EP-A2- 0 590 693
- WO-A1-2005/097380
- US-A- 4 505 974
- US-A- 5 344 704
- US-A- 5 928 778
- US-A1- 2003 035 926
- US-B2- 6 911 263

## Description

### Field of the Disclosure

The present disclosure relates to a decorative sheet comprising a substrate layer and a scratch resistant layer.

### Background

Recently, various kinds of decorative sheets are placed in the market. Some kinds of decorative sheets are used for wallpapers. When the decorative sheets are applied on lower part of walls or on the walls in elevator/lift cages, it is easy to be scratched by pets, children, or goods such as baggage or carts. Melamine boards are used for the lower part of the walls to prevent scratching, and cushion materials are used for the walls in elevator/lift cages for the same purpose. It is desired to provide a decorative sheet which is resistant to scratching. US - A - 5,928,778 discloses a decorative material including a substrate and an abrasion-resistant coating layer formed thereon. The abrasion-resistant coating layer includes spherical particles having an average particle diameter of 3 to 50 micrometers, and a binder including crosslinkable resins. The amount of the spherical particles is from 5% to 50% by weight of the total amount of the components and. The hardness of the spherical particles is higher than that of the binder.

### Summary

The scope of the present invention is defined by the claims.

The present disclosure provides a decorative sheet comprising
(i) a substrate layer and
(ii) a scratch resistant layer comprising a clear resin and hard particles dispersed in the clear resin,
wherein the average particle diameter of the hard particles is larger than the thickness of the clear resin layer, the amount of the hard particles is 30 parts by mass to 400 parts by mass with respect to 100 parts by mass of the clear resin, and the area ratio of the hard particles which protrude at least 3 micrometers from the outer surface of the clear resin layer is 10 % to 80 % of the scratch resistant layer, wherein the scratch resistant layer is obtained by coating a clear resin comprising the hard particles on the substrate layer, and pressing the obtained layer coated on the substrate layer.

### Brief Description of the Drawings

Figure 1 is a view showing one embodiment of the decorative sheet of the present disclosure.
Figure 2 is a view showing another embodiment of the decorative sheet of the present disclosure.
Figure 3a to 3d are views showing one process of making the decorative sheet of the present disclosure.
Figure 4a to 4d are views showing another process of making the decorative sheet of the present disclosure.

### Detailed Description

The decorative sheet of the present disclosure includes a substrate layer and a scratch resistant layer. The scratch resistant layer can be obtained by coating a clear resin containing hard particles in the clear resin on the substrate layer, and pressing the obtained layer. The decorative sheet may further include a clear film layer between the substrate layer and the scratch resistant layer. The decorative sheet may further include an adhesive layer and a liner.

As used herein, the term "pressing" represents to press the layer such as a clear resin layer or a scratch resistant layer including a clear resin and hard particles. By pressing the layer, the hard particles included in the clear resin can be embedded.

The substrate layer can be a base of the decorative sheet of the present disclosure and provide a base color to the decorative sheet. The substrate layer includes, but is not limited to, thermoplastic resins such as, for example, polyvinyl chloride, polyvinyl chloride - vinyl acetate, acrylic, polyesters such as PET or PET-G, or cellulose.

The substrate layer may have an ink printed image provided on it by known methods such as gravure printing or calendar printing. The substrate layer may be colored or contain an illustration.

When the decorative sheet of the present disclosure includes the clear film layer, the clear film layer includes known plastic films, which may be clear or clear enough to see through it to the surface of the substrate layer.

The thickness of the substrate layer may be about 30 micrometers to about 500 micrometers, or in another embodiment it may be about 50 micrometers to about 300 micrometers, or in a further embodiment it may be about 100 micrometers to 300 micrometers. The thickness of the clear film layer may be about 50 micrometers to about 300 micrometers.

The glass transition temperature (Tg) of the substrate layer and the clear film layer may be about 50 degrees C to about 80 degrees C. This range of Tg may permit embedding of the hard particles more effectively in the pressing process of the present disclosure.

The scratch resistant layer of the present disclosure includes a clear resin layer and hard particles.

The clear resin for the clear resin layer includes, but is not limited to, thermoplastic resins such as urethane resin, acrylic resin, acrylic-urethane resin, polyesters, silicone, or fluoropolymer. The hard particles of the present disclosure include, but are not limited to, for example, beads or particles made of alumina, silica, chromium oxide, iron oxide, zirconium, titanium, or mixtures thereof. The shape of the hard particles is not limited, but may include spherical, floccus, ellipsoidal, acicular, polyhedral, cylindrical or irregular. The hardness of the hard particles may be 8 to 15 in Mohs hardness, or in another embodiment 10 to 15 Mohs.

The hard particles can be dispersed in the scratch resistant layer. Preferably the hard particles are dispersed uniformly in the scratch resistant layer. As used herein, the term "uniformly dispersed" refers to the state in which the average number of the hard particles per unit area is substantially the same.

In the scratch resistant layer of the present disclosure,
(i) the average particle diameter of the hard particles is larger than the thickness of the clear resin layer,
(ii) the amount of the hard particles is about 30 parts by mass to about 400 parts by mass with respect to 100 parts by mass of the clear resin, and
(iii) the area ratio of the hard particles which protrude at least 3 micrometers from the outer surface of the clear resin layer is about 10 % to about 80 % of the scratch resistant layer.

The average particle diameter of the hard particles can be measured with Multisizer™ (Electrical Sensing Zone Method of particle size analyzer) available from Beckman Coulter, Inc. The average particle diameter of the hared particles is not less than that of the clear resin layer after coating and drying the clear resin, and can be from about 10 micrometers to about 110 micrometers. The thickness of the scratch resistant layer may be from about 5 micrometers to about 100 micrometers. The amount of the hard particles may be about 30 parts by mass to about 400 parts by mass with respect to 100 parts by mass of the clear resin. The amount of the hard particles is proportional to haze value of the scratch resistant layer, that is, if the amount of the hard particles increases, the haze value of the scratch resistant layer increases. When the decorative sheet includes a substrate layer having color, print or illustration, the color, print or illustration can be seen through the scratch resistant layer. The amount of the hard particles can be selected based on the desired haze value. From the view of scratch resistance, a larger amount of the hard particles may be better and the haze value may be up to 100. If the color, print or illustration should be seen through the scratch resistant layer, the haze value can be up to about 95.

The area ratio of the hard particles which protrude at least 3 micrometers from the outer surface of the clear resin layer of the scratch resistant layer is about 10 % to about 80 %, or in another embodiment about 30 % to about 60 %. The area ratio of the present disclosure can be observed, for example, by the following process.

A three-dimensional graphic of the surface of the scratch resistant layer is taken with a non-contact three-dimensional surface shape roughness measuring system. Then, the three-dimensional graphic is analyzed with an image analysis system and the area ratio of the hard particles which protrude at least 3 micrometers from the outer surface of the clear resin of the scratch resistant layer is determined. At the same time, the height of the hard particles can be determined by the image analysis system.

The clear resin layer of the present disclosure may further include a cross-linker. The cross-linker includes, but is not limited to, bisamide cross-linking agents such as, for example, 1,1'-isophtharoyl-bis(2-methyladiridine); aziridine cross-linking agents such as, for example, Chemitite PZ33 made by Nihon Shokubai, or NeoCryl CX-100 made by Avecia); carbodiimide cross-linking agents such as, for example, Carbodilite V-03, V-05, or V-07 made by Nisshinbo; epoxy cross-linking agents such as, for example, E-AX, E-5XM, or E5C made by Soken Chemical & Engineering; isocyanate cross-linking agents such as, for example, Colonate L and Colonate HK made by Nihon Urethane, and Desmodul H, Desmodul W and Desmodul I made by Bayer.

The amount of the crosslinker may be about 5 parts by mass to about 30 parts by mass (solids) with respect to 100 parts by mass of clear resin.

The decorative sheet of the present disclosure may further include an adhesive layer, which can be disposed on the opposite side of the substrate layer from the scratch resistant layer. Also the decorative sheet may include a liner, which can be on the outer surface of the adhesive layer.

The adhesive layer may be a known adhesive such as, for example, acrylic, urethane, polyester or silicone. The adhesive layer may have a thickness of about 10 micrometers to about 100 micrometers.

The liner includes known liners generally used in the adhesive tape area such as, for example, papers; plastics such as polyethylene, polypropylene, polyester or cellulose acetate; or papers coated with such plastics, or laminated with the plastics. These liners can be used without pretreatment, or with pretreatment by silicone or the like to improve release properties. The liner may have a thickness of about 50 micrometers to about 500 micrometers.

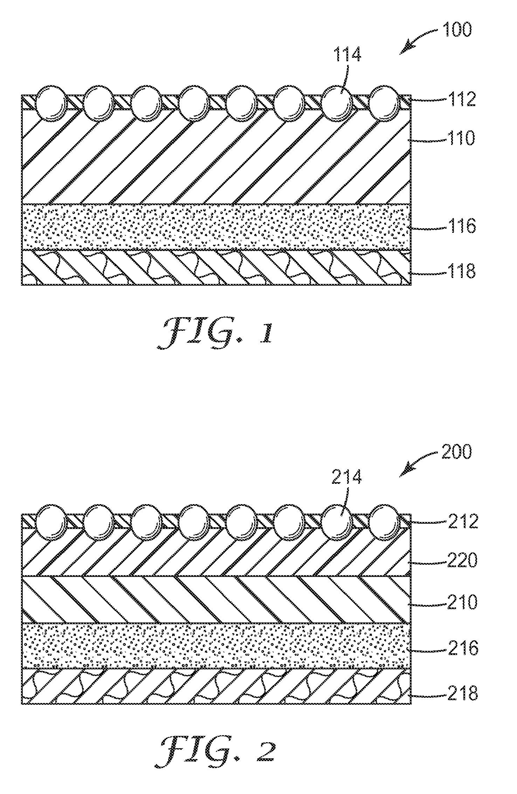

Figure 1 is a view showing one embodiment of the decorative sheet 100 of the present disclosure. The scratch resistant layer, which includes the hard particles 114 and clear resin layer 112, is disposed on the substrate layer 110. Further the adhesive layer 116 and the liner 118 are laminated.

Figure 2 is a view showing another embodiment of the decorative sheet 200 of the present disclosure. The scratch resistant layer, which includes the hard particles 214 and clear resin layer 212, is disposed on the clear film layer 220, further the substrate layer 210, the adhesive layer 216 and the liner 218 are also laminated.

The decorative sheet of the present disclosure can be prepared by the following method.

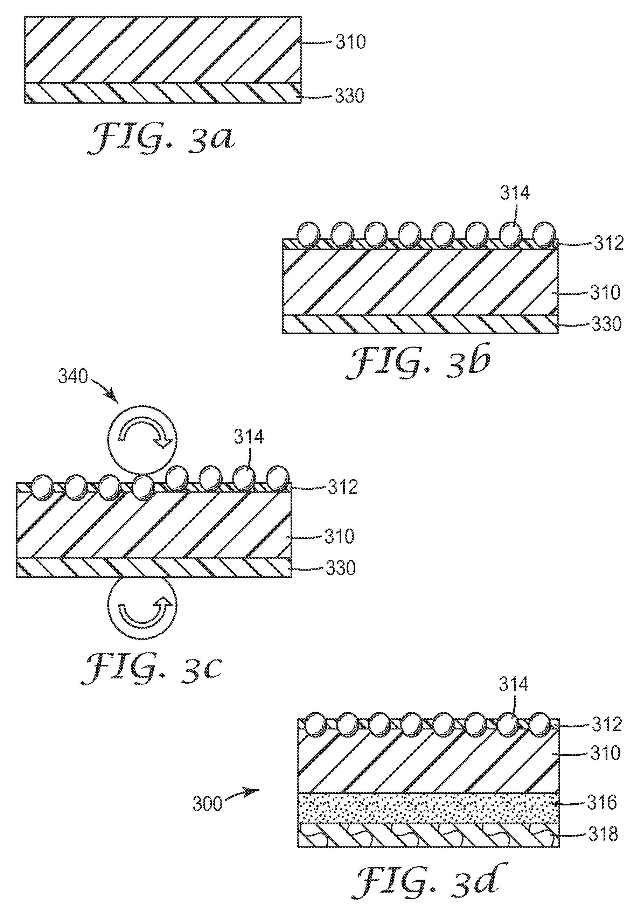

### Method 1 (Fig. 3a to 3d)

Step 1: A substrate layer 310 and a carrier film 330 are laminated by heat lamination.
Step 2: Hard particles 314 are added to a clear resin and mixed to prepare a preferably uniform mixture thereof. The mixture of clear resin and hard particles is coated on the outer surface of the substrate layer 310 by known coating methods such as, for example, bar coating or knife coating to form the scratch resistant layer.
Step 3 (Pressing process): The scratch resistant layer coated on the substrate layer 310 is pressed with a heated embossing roll 340 and a nip roll (not-heated). In this process, the hard particles 314 protruding from the outer surface of the clear resin layer 312 are pressed into the clear resin 312 layer thereby reducing the height from the surface of the clear resin layer 312 to the top of the hard particles compared to before the pressing process.
Step 4: After releasing the carrier film 330 from the substrate layer 310, an adhesive layer 316 disposed on a liner 318 can be laminated to the substrate layer 310 to give the decorative sheet 300 of the present disclosure.

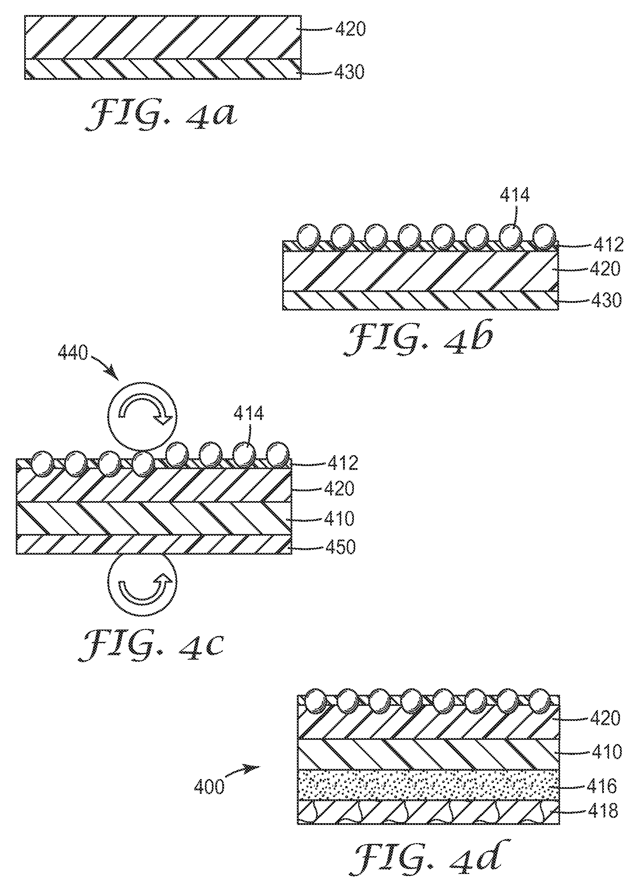

### Method 2 (Fig. 4a to 4d)

Step 1: A clear film layer 420 and a carrier film 430 are laminated by heat lamination. (Fig. 4a)
Step 2: Hard particles 414 are added to a clear resin and mixed to prepare a mixture thereof. The mixture of clear resin and hard particles is coated on the outer surface of the clear film 420 by known coating methods such as, for example, bar coating or knife coating to form the scratch resistant layer. (Fig. 4b)
Step 3: After releasing the carrier film 430 from the clear film layer 420, a substrate layer 410 disposed on a carrier film 450 is laminated to the clear film layer 420. (Fig. 4c)
Step 4 (Pressing process): The scratch resistant layer 412 coated on the substrate layer 410 is pressed with a heated embossing roller 440 and a nip roll(not-heated). In this process, the hard particles 414 protruding from the surface of the clear resin layer 412 are pressed into the clear resin layer thereby reducing the height from the surface of the clear resin layer 412 to the top of the hard particles compared to before the pressing process. (Fig. 4c)
Step 5: After releasing the carrier film 450 from the substrate layer 410, an adhesive layer 416 disposed on a liner 418 can be laminated to the substrate layer 410 to give the decorative sheet 400 of the present disclosure. (Fig. 4d)

In the process of making the decorative sheet, a carrier film may be used. The carrier film includes known plastic films such as, for example, polyesters such as polyethylene terephthalate (PET) film, or papers. The carrier film may be used just in certain process steps for protecting a layer such as an adhesive layer, or making production easy by adding strength to a layer. The carrier film can be released after completing its role.

### Examples

### Substrate layer

DI-NOC™ FILM WG-877 (Sumitomo 3M, Woodgrain pattern) without embossing or adhesive coating was used. Tg of the film was 60 degrees C.

### Clear resin

100 parts by mass of polyurethane resin (NIPPOLLAN 5196 available from NIPPON POLYURETHANE INDUSTRY CO., LTD., 32% solids) and five parts by mass of cross-linker (COLONATE HX available from NIPPON POLYURETHANE INDUSTRY CO., LTD., 100% solids) was mixed using a T.K. Auto Omo Mixer available from Tokushu Kika Kogyo Co., Ltd. for 5 minutes at 500 rpm.

### Hard particles

Aluminum beads (CB-A10S, CB-A20S, or CB-A30S available from SHOWA DENKO K.K.) were used in the following examples and comparative examples. The average particle diameter was 10 micrometers, 20 micrometers or 30 micrometers and the Mohs hardness was 11. The average diameters of the hard particle were measured with Multisizer™ (Electrical Sensing Zone Method of particle size analyzer) available from Beckman Coulter, Inc.

### Example 1

The substrate layer and a 25 micrometers thick PET film (Melinex S available from Teijin DuPont Film JAPAN Limited) (a carrier film) was laminated using a heated roll, a take-off roll and a nip roll with a heated roll temperature of 130 degrees C, a take-off roll temperature of 170 degrees C, a nip-pressure of 2.5 kgf/cm², and a line speed of 10 meters/minute.

100 parts by mass of the clear resin and 30 parts by mass of the hard particles having an average diameter of 20 micrometers (CB-A20S) were mixed with a mixer. The resultant solution was coated on the substrate layer by knife coating. After drying at 65 degrees C for 5 minutes and 155 degrees C for 5 minutes, a scratch resistant layer having a clear resin layer thickness of 10 micrometers was formed. The average height of hard particles from the surface of the substrate layer to the top of the hard particle was 20 micrometers. The obtained sheet was pressed with a pre-heat roll, a take-off roll and a heated embossing roll (sand texture). The temperature of the pre-heat roll, the take-off roll and the heated embossing roll were 130 degrees C, 170 degrees C, and 60 degrees C, respectively. The nip-pressure was 24.5 N/cm², and the line speed was 10 meters/minute. After pressing, the average height of hard particles from the surface of the substrate layer to the top of the hard particle was 5 micrometers.

A solution of acrylic adhesive, butyl acrylate : acrylic acid / 90:10 (mass ratio) in vinyl acetate (32% solids), was coated on a paper-based double faced polyethylene laminated release liner and dried at 65 degrees C for 2 minutes and 90 degrees C for 2 minutes, to give an adhesive layer having a thickness of 40 micrometers on the liner. The resulting adhesive layer/release liner and the pressed sheet above were laminated together with a nip roll to provide a decorative sheet. The nip roll temperature was room temperature and the nip pressure was 19.6 N/cm², and the line speed was 30 m/minutes. The elastic modulus of the scratch resistant layer was 1250 Mpa.

### Examples 2 to 4

The decorative sheets were prepared in the same manner as Example 1. Hard particles having average diameter of 30 micrometers (CB-A30S) were used. The mass ratios between the clear resin and the hard particles are shown in Table 1.

### Comparative example 1

A decorative sheet was prepared in the same manner as Example 1. Hard particles having average diameter of 10 micrometers (CB-A10S) were used. The mass ratio between the clear resin and the hard particles is shown in Table 1. The obtained decorative sheet did not have any hard particles which protruded at least 3 micrometers from the outer surface of the clear resin layer.

### Comparative example 2

A decorative sheet was prepared in the same manner as Example 2 except the mass ratio between the clear resin and the hard particles was 100 to 5 as shown in Table 1.

### Comparative example 3

DI-NOC™ Film WG-877 per se (without a scratch resistant layer) was used.

### Comparative example 4

A decorative sheet was prepared in the same manner as Example 1, except that no hard particles were added to the clear resin of the scratch resistant layer.

### Comparative example 5

A decorative sheet was prepared in the same manner as Example 3, but the scratch resistant layer was not pressed.

**Table 1**

| | Avg. Diameter of hard particles (micrometers) | Thickness of the clear resin layer (micrometers) | Mass ratio resin/particles (parts by mass) |
|---|---|---|---|
| Ex.1 | 20 | 10 | 100/35 |
| Ex.2 | 30 | 10 | 100/15 |
| Ex.3 | 30 | 10 | 100/35 |
| Ex.4 | 30 | 10 | 100/100 |
| CEx. 1 | 10 | 10 | 100/35 |
| CEx. 2 | 30 | 10 | 100/5 |
| CEx. 3 | - | - | - |
| CEx. 4 | - | 10 | 100/0 |
| CEx.5 | 30 | 10 | 100/35 |

### Area ratio of hard particles protruding from the surface of the clear resin layer

A three-dimensional graphic of the surface of the scratch resistant layer was obtained using a non-contact three-dimensional surface shape roughness measuring system (object lens: 10x, internal lens: 0.5 x, Model WYKO NT1100 available from Veeco). A 1.2mm × 0.93mm graphic was obtained. The graphic was analyzed with Photoshop Extended CS3 by Adobe, which detected the area ratio of the hard particles which protruded at least 3 micrometers from the outer surface of the clear resin of the scratch resistant layer, and calculated the area ratio. The results are shown in Table 2.

### Abrasion loss

Each sample was abraded at 500 cycles and 1 kg load with an AB-010 Taber type Abrasion tester available from TESTER SANGYO CO., LTD by using abrasion test wheels CS-17 available from TABER INDUSTRIES. The difference in mass before and after the test was calculated. The results are shown in Table 2.

### Scratch resistance

The surface of each sample was reciprocally rubbed 100 cycles using a load of about 500 grams with #120 or #240 of sandpaper, available from Sankyo-Rikagaku Co., Ltd., attached to a Color Fastness Rubbing Tester, available from TESTER SANGYO CO., LTD. The sample surface was then visually observed to determine the amount of scratching. The scratch resistance was compared with that of Di-Noc™ (Comparative example 3) and ranked as "Same" where the amount of scratching was the same as observed for Di-Noc™, "Good" where the amount of scratching was less than observed for Di-Noc™, and "Excellent" where the amount of scratching was much less than observed for Di-Noc™. The results are shown in Table 2.

### Contamination resistant property

After the scratch resistance test, the contamination resistant property was measured in accordance with JIS A 5709. The results are shown in Table 2.

### Pencil hardness

The pencil hardness of each sample was measured in accordance with the method of JIS K 5400. The surface of each sample was scratched with various hardnesses of pencil. The results are shown in Table 2.

### Haze value

The clear resin and the hard particles were coated on a clear PET film and the haze value measured in accordance with JIS K 7105. The results are shown in Table 2.

**Table 2**

| | Area ratio of hard particles (%) | Abrasion loss (grams) | Scratch resistance (Rubbing type) | | Contamination resistant property after scratch resistance (%) | | Pencil hardness | Haze value of scratch resistant layer before press (%) |
|---|---|---|---|---|---|---|---|---|
| | | | #240 | #120 | #240 | #120 | | |
| Ex.1 | 31 | 0.0141 | Excellent | Excellent | 91 | 92 | 2H | 55.08 |
| Ex.2 | 15 | 0.0128 | Excellent | Excellent | 93 | 89 | 2H | 32.71 |
| Ex.3 | 46 | 0.0179 | Excellent | Excellent | 92 | 87 | 3H | 57.92 |
| Ex.4 | 73 | 0.0186 | Excellent | Excellent | 92 | 86 | 9H | 85.21 |
| Cex.1 | 4 | 0.0141 | Same | Same | 84 | 78 | B | 58.31 |
| Cex.2 | 8 | 0.0105 | Good | Good | 102 | 96 | B | 14.13 |
| Cex.3 | 0 | 0.0271 | - | - | 78 | 77 | 2B | 13.32 |
| Cex.4 | 0 | 0.0097 | Same | Same | 80 | 80 | 2B | 2.26 |
| Cex.5 | 69 | 0.0361 | Good | Good | 86 | 94 | B | 57.92 |

## Claims

1. A decorative sheet comprising
(i) a substrate layer; and
(ii) a scratch resistant layer comprising a clear resin layer and hard particles dispersed in the clear resin layer,
wherein the average particle diameter of the hard particles is larger than the thickness of the clear resin layer,
the amount of hard particles is 30 parts by mass to 400 parts by mass with respect to 100 parts by mass of the clear resin layer, and
the area ratio of the hard particles which protrude at least 3 micrometers from the outer surface of the clear resin layer is 10% to 80% of the scratch resistant layer, wherein the scratch resistant layer is obtained by coating a clear resin comprising the hard particles on the substrate layer, and pressing the obtained layer coated on the substrate layer.

2. The decorative sheet according to claim 1 further comprising a clear film layer between the substrate layer and the scratch resistant layer.

3. The decorative sheet according to claim 1, wherein the hard particles are uniformly dispersed in the scratch resistant layer.

4. The decorative sheet according to claim 1, wherein the average particle diameter of the hard particles is 10 micrometers to 110 micrometers.

5. The decorative sheet according to claim 1, wherein the thickness of the clear resin layer is 5 micrometers to 100 micrometers.

6. The decorative sheet according to claim 1, wherein the glass transition temperature (Tg) of the substrate layer is 50 degrees C to 80 degrees C.

7. The decorative sheet according to claim 1 further comprising an adhesive layer and a liner.

## Patentansprüche

1. Eine Dekorationsfolie, aufweisend
(i) eine Substratschicht und
(ii) eine kratzbeständige Schicht, die eine Klarharzschicht und in die Klarharzschicht dispergierte Hartteilchen aufweist,
wobei der durchschnittliche Teilchendurchmesser der Hartteilchen größer als die Dicke der Klarharzschicht ist,
die Menge der Hartteilchen 30 Masseteile bis 400 Masseteile in Bezug auf 100 Masseteile der Klarharzschicht beträgt und
das Flächenverhältnis der Hartteilchen, welche mindestens 3 Mikrometer aus der Außenfläche der Klarharzschicht hervorstehen, 10 % bis 80 % der kratzbeständigen Schicht beträgt, wobei die kratzbeständige Schicht durch Beschichtung eines die Hartteilchen aufweisenden Klarharzes auf die Substratschicht, und Einpressen der auf der Substratschicht beschichteten erzeugten Schicht hergestellt wird.

2. Dekorationsfolie nach Anspruch 1, ferner aufweisend eine durchsichtige Folienschicht zwischen der Substratschicht und der kratzbeständigen Schicht.

3. Dekorationsfolie nach Anspruch 1, wobei die Hartteilchen gleichmäßig in der kratzbeständigen Schicht verteilt sind.

4. Dekorationsfolie nach Anspruch 1, wobei der durchschnittliche Teilchendurchmesser der Hartteilchen 10 Mikrometer bis 110 Mikrometer beträgt.

5. Dekorationsfolie nach Anspruch 1, wobei die Dicke der Klarharzschicht 5 Mikrometer bis 100 Mikrometer beträgt.

6. Dekorationsfolie nach Anspruch 1, wobei die Glasübergangstemperatur (Tg) der Substratschicht 50 Grad C bis 80 Grad C beträgt.

7. Dekorationsfolie nach Anspruch 1, ferner aufweisend eine Klebeschicht und einen Liner.

## Revendications

1. Feuille décorative comprenant
(i) une couche de substrat ; et
(ii) une couche résistante aux éraflures comprenant une couche de résine incolore et des particules dures dispersées dans la couche de résine incolore,
dans laquelle le diamètre moyen de particule des particules dures est plus grand que l'épaisseur de la couche de résine incolore,
la quantité de particules dures va de 30 parties en masse à 400 parties en masse par rapport à 100 parties en masse de la couche de résine incolore, et
le rapport de superficie des particules dures qui dépassent d'au moins 3 micromètres de la surface externe de la couche de résine incolore va de 10 % à 80 % de la couche résistante aux éraflures, dans laquelle la couche résistante aux éraflures est obtenue par revêtement d'une résine incolore comprenant les particules dures sur la couche de substrat et par pressage de la couche obtenue revêtue sur la couche de substrat.

2. Feuille décorative selon la revendication 1, comprenant en outre une couche de film incolore entre la couche de substrat et la couche résistante aux éraflures.

3. Feuille décorative selon la revendication 1, dans laquelle les particules dures sont uniformément dispersées dans la couche résistante aux éraflures.

4. Feuille décorative selon la revendication 1, dans laquelle le diamètre moyen de particule des particules dures va de 10 micromètres à 110 micromètres.

5. Feuille décorative selon la revendication 1, dans laquelle l'épaisseur de la couche de résine incolore va de 5 micromètres à 100 micromètres.

6. Feuille décorative selon la revendication 1, dans laquelle la température de transition vitreuse (Tg) de la couche de substrat va de 50 degrés C à 80 degrés C.

7. Feuille décorative selon la revendication 1, comprenant en outre une couche adhésive et un revêtement.
